## Europäisches Patentamt

## European Patent Office

## Office européen des brevets

(19)

(11) Veröffentlichungsnummer: **0 121 239**
**B1**

(12)

# EUROPÄISCHE PATENTSCHRIFT

(45) Veröffentlichungstag der Patentschrift:
23.09.87

(51) Int. Cl.⁴: **H 04 Q 11/04,** H 04 Q 3/54,
H 04 M 3/36

(21) Anmeldenummer: 84103447.3

(22) Anmeldetag: 28.03.84

(54) Schaltungsanordnung für Fernmeldeanlagen, insbesondere Fernsprechvermittlungsanlagen, mit informationsverarbeitenden Schaltwerken und Einrichtung zur Abwehr von Überbelastungen.

(30) Priorität: 31.03.83 DE 3311875

(43) Veröffentlichungstag der Anmeldung:
10.10.84 Patentblatt 84/41

(45) Bekanntmachung des Hinweises auf die Patenterteilung:
23.09.87 Patentblatt 87/39

(84) Benannte Vertragsstaaten:
AT CH DE FR GB LI NL SE

(56) Entgegenhaltungen:
DE-A-3 236 130
GB-A-2 001 227

PATENTS ABSTRACTS OF JAPAN, Band 6, Nr. 132
(E-119) 1010 , 17. Juli 1982;
4th INTERNATIONAL CONFERENCE ON
SOFTWARE ENGINEERING FOR
TELECOMMUNICATION SWITCHING SYSTEMS,
20.-24. Juli 1981, Seiten 167-171, Coventry, GB; C.
HARVEY u.a.: "Controlling overloads in
multiprocessor systems"
9th INTERNATIONAL TELETRAFFIC CONGRESS
(ITC), Oktober 1979, Seiten 1-7, Torremolinos, ES;
P. SOMOZA u.a.: " 'Dynamic processor overload
control' and its implementation in certain singleprocessor and multiprocessor SPC systems"
TELCOM REPORT, Band 4, Nr. 3, 1981, Seiten 233-
240, München, DE; H. DITTMAR u.a.:

(73) Patentinhaber: Siemens Aktiengesellschaft Berlin
und München, Wittelsbacherplatz 2, D-8000
München 2 (DE)

(72) Erfinder: Daisenberger, Georg, Dipl.- Ing., Kärtner-
Platz 3, D-8000 München 21 (DE)

(56) Entgegenhaltungen: (Fortsetzung)
"Verkehrsmessung im öffentlichen
Digitalvermittlungssystem EWSD"
ELECTRONIC SWITCHING, 1983, Seiten 411-415,
Elsevier Science Publishers B.V., Amsterdam, NL;
Teil IV "Call processing", Kapitel 1, Absatz 8,
"Traffic supervision and load control"

EP 0 121 239 B1

## Beschreibung

Die Erfindung bezieht sich auf eine Schaltungsanordnung für Fernmeldeanlagen, insbesondere Fernsprechvermittlungsanlagen, mit zentralen und/oder teilzentralen informationsverarbeitenden Schaltwerken mit einer hinsichtlich der Informations-Verarbeitungskapazität begrenzten Leistungsfähigkeit, und mit Einrichtungen zur Ermittlung der Informationsverarbeitungs-Verkehrsbelastung jeweils eines Schaltwerkes und zur Erkennung von Informationsverarbeitungs-Verkehrsüberlastungen und zur Abwehr solcher Überlastungen mittels Zählern, die nach Maßgabe von die Verkehrsbelastung betreffenden Steuersignalen vorwärtsgeschaltet und in regelmäßigen, der Informations-Verarbeitungskapazität gemäßen Zeitabständen rückwärtsgeschaltet werden und einen Grenzwert erreichen.

Anmeldungen mit gleicher Priorität und gleichem Anmeldetag sind EP-A-84 103 422, EP-A-84 103 444, EP-A-8 410 345 und EP-A-8 410 346.

Eine Schaltungsanordnung dieser Art beschreibt bereits die DE-A-3 236 130. Bei der hierin beschriebenen Anordnung werden teilzentralen Schalteinrichtungen, die einer zentralen Informationsverarbeitungseinrichtung Informationen zur Informationsverarbeitung zuführen, Überlastsignale von der Informationsverarbeitungseinrichtung zugeleitet, wenn deren Belastbarkeitsgrenze bezüglich Verkehrsbelastbarkeit überschritten wird. Die in den teilzentralen Schalteinrichtungen vorgesehenen Zähler erhalten also Überlastsignale von der zentralen Informationsverarbeitungseinrichtung. Das Problem der Überlastung liegt also in der zentralen Informationsverarbeitungseinrichtung. Die Überlastabwehr geschieht in den teilzentralen Schalteinrichtungen. Diese erhalten hierzu Überlastsignale von der zentralen Informationsverarbeitungseinrichtung. Die Überlastsituation wird also dort ermittelt, wo sie zum Problem wird, nämlich in der zentralen Informationsverarbeitungseinrichtung. Wie diese Ermittlung der Überlastsituation stattfindet, ist in der genannten Offenlegungsschrift nicht gesägt, aber ebenfalls an sich bekannt.

Für die Erkennung der Überlastsituation und die Bildung von Überlastsignalen wurde in einem Vortrag auf dem "9th INTERNATIONAL TELETRAFFIC CONGRESS (ITC)" im Okt. 1979 in Torremolinos/Spanien (Konferenzpapier ITC-9 von SOMOZA/GUERRERO 1-7) erläutert, das die Anzahl der auf einen zentralen Rechner treffenden Anforderungen in einzelnen Zeitabschnitten gezählt wird, die aufeinander sukzessive folgen, und daß das dabei jedes Mal erhaltene Zählergebnis mit einem Vergleichswert verglichen wird; dieser wird zudem noch in Abhängigkeit von der jeweils gegebenen Betriebssituation variiert. Jedes Vergleichsergebnis gibt Aufschluß über die Frage der augenblicklichen Rechnerbelastung, insbesondere hinsichtlich eventueller Überbelastung. Anhand der jeweils in jedem der Zeitabschnitte durch Zählung erfaßten und nach jedesmaliger Beendigung desselben durch Vergleich ermittelten Belastungsergebnisse kann die Zahl der Rechneranforderungen und damit der Zustrom von im Rechner zu verarbeitenden Informationen eingeschränkt oder vorübergehend ganz gestopt werden. Dadurch soll die Verkehrsbelastung optimal an Leistungsfähigkeit und Überlastgrenzen des Rechners angepaßt werden, um sowohl eine möglichst hohe Ausnutzung der Rechnerkapazität zu erzielen, als auch Überbelastungen soweit wie möglich zu vermeiden, die bekanntlich erhebliche vorübergehende Betriebseinschränkungen oder Betriebsstörungen für die den Rechner in Anspruch nehmenden Einrichtungen zur Folge haben können. Dies wird in den durch den Vortrag angesprochenen Anwendungsfällen also durch eine dynamische Anpassung der Verkehrsbelastung an die nach wechselnder Art und darin nach Häufigkeit der dem Rechner zugeführten Rechenaufträge verbessert.

Die bekannten Methoden zur Erkennung und Regelung der Rechnerbelastung liefern aber nur ein ausreichend genaues Ergebnis, wenn der einzelne Zeitraum, der für die Zählung der betreffenden Ereignisse, z. B. Rechneranforderungen, verwendet wird, in Bezug auf den mittleren zeitlichen Abstand zwischen diesen Ereignissen groß genug ist, so daß durch Schwankungen der Rechnerbelastung, die kontinuierlich steigt und fällt, diese Rechnerbelastung nicht in groben Sprüngen dargestellt wird, damit eine entsprechende Regelung die Rechnerbelastung optimal an die Belastbarkeit anzupassen vermag. Die darin liegende Forderung, daß der Zeitraum für die einzelne Zählung der Ereignisse groß genug sein muß, wirkt sich negativ auf den jeweiligen Zeitpunkt der Verfügbarkeit der Ergebnisse jedes der Zählvorgänge aus. Das Ergebnis der Ermittlung der Rechnerbelastung weist also immer einen Zeitverzug auf, der zwangsläufig dadurch bedingt ist, daß für einen jeden Erfassungszeitraum das ihm entsprechende Ergebnis erst nach seinem Ablauf ermittelt wird und zwar durch einen Vergleichsvorgang. Dieser Zeitverzug ist wiederum nachteilig für eine Einflußnahme auf die Rechnerbelastung zu deren Regelung. Denn entweder kann eine Überlastabwehr erst zum Tragen kommen, wenn die Überlastsituation bereits eingetreten ist, also im Hinblick auf tatsächlich erwachsende Überbelastungen zu spät, oder die Überlastabwehr muß bereits einsetzen, bevor die Belastungsgrenze des Rechners überhaupt erreicht ist, d.h. "auf Verdacht", also nicht nur in denjenigen Betriebsfällen, in denen die Rechnerbelastung tatsächlich über die Belastbarkeitsgrenze ansteigt, sondern darüber hinaus auch in allen denjenigen Betriebsfällen, in denen der Anstieg der Rechnerbelastung in Richtung auf die Belastbarkeitsgrenze nur die Annahme veranlaßt, daß die Belastbarkeitsgrenze überschritten werden wird, in denen tatsächlich aber die Rechnerbelastung die Belastbarkeitsgrenze nicht erreicht oder überschreitet. Das Problem liegt also in der Extrapolation des Belastungsverhaltens über die Zeit. - Eine Regelung ist nun desto weniger wirksam, je später sie einsetzt; ihr relativ spätes Einsetzen kann darüber hinaus zur Folge haben, daß Perioden stärkerer Unterbelastung mit Perioden von Überbelastung sich kontinuierlich abwechseln, ohne daß dies durch die tatsächlich anfallende Verkehrsbelastung wirklich bedingt wäre. Die genannte Forderung verschärft sich noch unter der Bedingung, daß die zeitliche Verteilung der zu erfassenden Ereignisse stärker streut, daß also die zeitlichen Abstände zwischen den jeweils aufeinanderfolgenden Ereignissen untereinander relativ ungleich sind. Dieser Effekt ist desto gravierender, je kleiner der jeweilige Erfassungsbereich ist; je größer er nämlich ist, desto mehr kommt die ausgleichende Wirkung der statistischen Verteilung zum Tragen. Dies spricht generell dafür, die in bekannter Weise durchgeführte Ermittlung der Überlastsituation an zentraler Stelle vorzusehen.

Es gibt nun aber solche Anwendungsfälle für Überlastabwehreinrichtungen, in denen der jeweilige Erfassungsbereich relativ klein ist und das Ergebnis einer Verkehrsbelastungsmessung unter der Voraussetzung ausreichend großer Genauigkeit mit entsprechenden Einrichtungen bekannter Art relativ spät gegenüber dem jeweils erforderlichen Zeitpunkt des Einsetzens notwendiger Regelungsvorgänge verfügbar ist. Deshalb besteht ganz allgemein die Aufgabe, ein solches Ergebnis mit ausreichend großer Genauigkeit jeweils früher zur Verfügung zu stellen. - Die erläuterte Problematik besteht insbesondere bei der Zusammenarbeit teilzentraler Schaltwerke mit einem zentralen Schaltwerk, wenn erstere an letzteres Informationen zur weiteren Verarbeitung liefern. Wegen der zentralen Funktionsbedeutung eines zentralen Schaltwerkes ist es besonders wichtig, von diesen Überlastungen fernzuhalten. Für zentrale Schaltwerke geht es - vereinfacht dargestellt - darum, Überlastungen fernzuhalten und entsprechende Gegenmaßnahmen zu treffen, und zwar rechtzeitig bevor solche Überlastungen eintreten können. Für die Erfindung besteht deshalb im Blick auf diese zuletzt angegebenen Zusammenhänge die Aufgabe, die auf ein zentrales Schaltwerk zukommende Belastung so frühzeitig wie möglich zu erkennen und Abwehrmaßnahmen so früh wie möglich einzuleiten, um auch einen diesbezüglich möglichst gleichmäßigen Regelungseffekt zu erzielen.

Die Erfindung löst die gestellte Aufgabe dadurch, daß die Steuersignale Initial-Schaltkennzeichen, insbesondere von diesen abgeleitete Steuerzeichen sind, die jeweils ein nachfolgendes Eintreffen einer zu verarbeitenden Information ankündigen, und daß durch Kumulation dieser Zeichen mittels des Zählers bei Erreichen des Grenzwertes ein Überlastkriterium entweder zwischen einem zum Erreichen des Grenzwertes führenden Initial-Schaltkennzeichen und einem ersten von ihm zugeordneten Zeichen einer entsprechenden Information gebildet wird und dazu führt, daß diese Zeichen von dem betreffenden Schaltwerk nicht aufgenommen werden, oder nach Aufnahme eines Initial-Schaltkennzeichens gebildet wird und nach Aufnahme der ihm entsprechenden Information dazu führt, daß ein weiteres Initial-Schaltkennzeichen nicht aufgenommen wird.

Während also in dem eingangs angegebenen bekannten Falle die Zähler Überlastsignale empfangen, empfangen sie erfindungsgemäß Initial-Schaltkennzeichen; Überlastsignale dagegen werden von den Zählern abgegeben. Hierzu wird der zeitliche Abstand zwischen Initial-Schaltkennzeichen und dem Beginn der jeweils durch dasselbe angekündigten Information ausgenutzt. Das Überlastsignal führt auch nicht zu einer allgemeinen Zufuhrsperre von Informationen für das betreffende Schaltwerke, sondern wirkt sich gezielt und beschränkt nur auf diejenigen Informationen aus, deren zugeordnetes Initial-Schaltkennzeichen unmitellbar die Entstehung des Überlastsignales ausgelöst, also herbeigeführt hat.

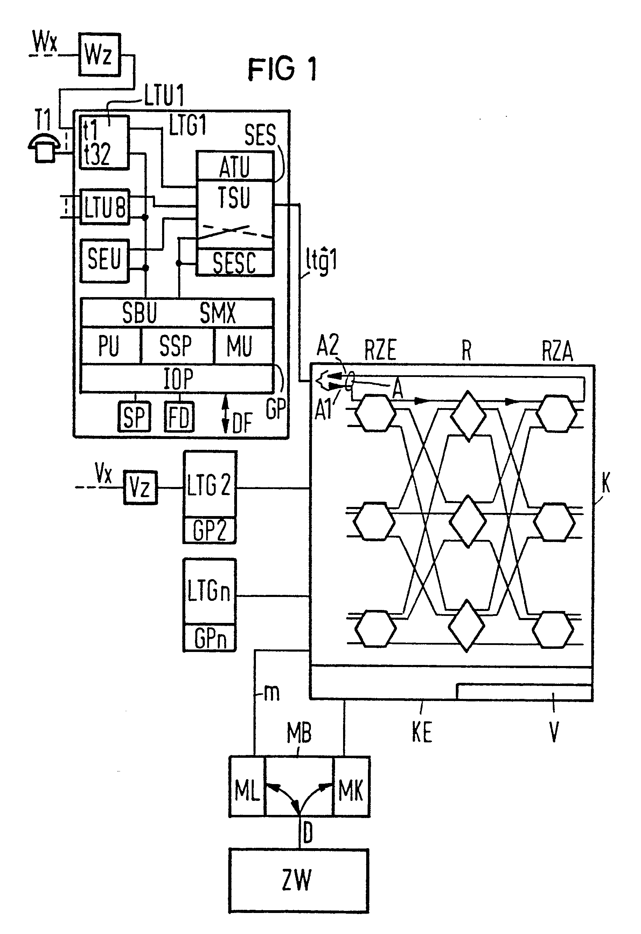

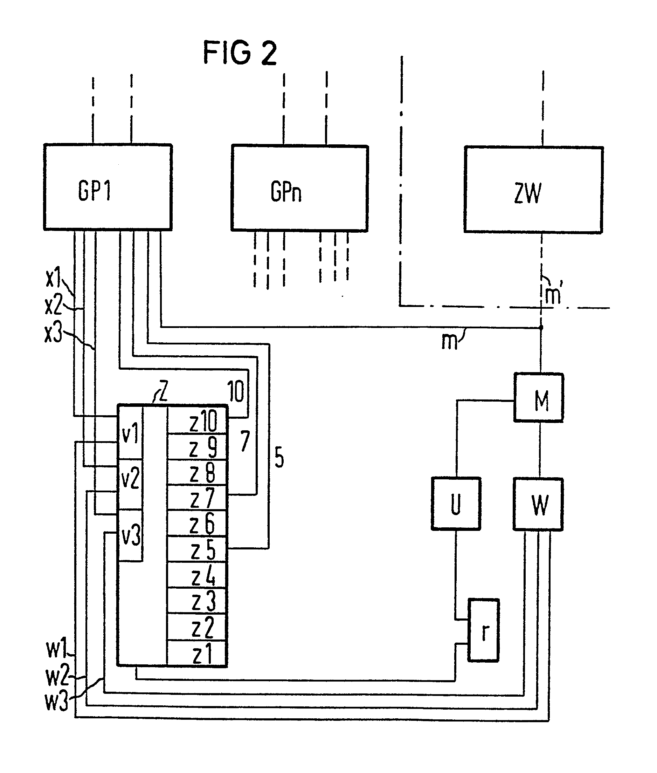

In Fig. 1 und 2 der Zeichnungen ist ein Ausführungsbeispiel der Erfindung nur in wesentlich zu ihrem Verständnis beitragenden Bestandteilen dargestellt. Die Beschreibung geht zunächst auf die allgemeinen Funktionsabläufe einer erfindungsgemäß arbeitenden PCM-Fernsprechvermittlungsanlage nach Fig. 1 ein. Erst weiter unten werden die erfindungsgemäßen Besonderheiten dieser Vermittlungsanlage zusätzlich anhand von Fig. 2 erläutert.

Ein in drei Koppelstufen RZE, R und RZA aufgebautes Koppelfeld weist eingangsseitig eine größere Anzahl von Koppelfeldanschlüssen auf, von denen einer dargestellt und mit A bezeichnet ist. Das Koppelfeld besteht aus mehreren Koppelfeldteilen. Jeder der Koppelfeldanschlüsse umfaßt immer ein Paar von Zeitmultiplexleitungen, von denen die eine Zeitmultiplexleitung zur Signalübertragung zum Koppelfeld hin und die andere Zeitmultiplexleitung zur Signalübertragung aus dem Koppelfeld heraus dient. Dementsprechend umfaßt der Koppelfeldanschluß A eine Zeitmultiplexleitung A1 und eine Zeitmultiplexleitung A2. Für jede dieser beiden Zeitmultiplexleitungen ist die jeweilige Signalübertragungsrichtung durch entsprechende Pfeile angedeutet.

Die Koppelvielfache der ersten Koppelstufe RZE sind kombinierte Zeitlagen-Raumlagen-Vielfache, wie die dargestellten Symbole erkennen lassen. Die Koppelvielfache der mittleren Koppelstufe R sind Raumlagenvielfache. Die Koppelvielfache der letzten Koppelstufe RZA sind wieder Raumlagen-Zeitlagen-Vielfache. In jeder Koppelstufe ist eine größere Anzahl der angegebenen Vielfache vorgesehen, wenngleich pro Koppelstufe jeweils nur drei Vielfache der angegebenen Art dargestellt sind. Die Koppelvielfache der verschiedenen Koppelstufen sind untereinander über Zwischenleitungen in der aus der Zeichnung ersichtlichen Weise verbunden. Diese Zwischenleitungen sind Zeitmultiplex-Zwischenleitungen. Ebenso sind die Koppelfeldanschlüsse zeitmultiplexer Art.

An die Koppelfeldanschlüsse, z. B. A des Koppelfeldteiles K, sind über für jeweils beide Nachrichtenübertragungsrichtungen ausgelegte Zeitmultiplexleitungen, z. B. die Zeitmultiplexleitung ltg1, Anschlußgruppen, z. B. die Anschlußgruppe LTG1 (Line Trunk Group), einzeln angeschlossen. Eine solche Anschlußgruppe ist eingangsseitig mit Teilnehmerleitungen (analog), Analog-Verbindungsleitungen und mit PCM-Verbindungsleitungen (alternativ sowie auch in Kombination) beschaltbar. Eine über eine Teilnehmerleitung angeschlossene Teilnehmerstation ist mit T1 bezeichnet. In einer Anschlußgruppe sind Codierer, Decodierer, Multiplexer, Demultiplexer und die für eine Realisierung der sogenannten BORSCHT-Funktionen erforderlichen Einrichtungen enthalten (vgl. NTZ Bd. 33/1980, Heft 10, Seiten 646 bis 652 und 1978 International Zurich Seminar on Digital Communications, Prooceedings 30 IEEE Catalogue, Nr. 78 CH 1225-0 ASST, Seiten B2-1, A4.1, auch die DE-A- 31 00 811, 31 04 00 und 31 06 903.

In der Zeichnung ist unter anderem die Anschlußgruppe LTG1 gezeigt. Deren Aufbau und Arbeitsweise sind ausführlich in der DE-A-28 26 113 ab Seite 6 unten beschrieben. Ferner sei auf das Beiheft zum 4. Jahrgang (1981) der Zeitschrift "telcom report" hingewiesen. Die weiteren Erläuterungen setzen diese Beschreibungen als bekannt voraus und beschränken sich auf die im vorliegenden Falle besonders wesentlichen Zusammenhänge.

Ein zentrales Steuerwerk ZW dient unter anderem zur Herstellung der über das Koppelfeld aufzubauenden Nachrichtenverbindungen. Es ermittelt die für die Herstellung einer jeden Verbindung erforderlichen Vermittlungsdaten. Die Vermittlungsdaten für eine durchzuschaltende Verbindung geben bekanntlich genau den Verlauf der betreffenden Verbindung über das Koppelfeld an, also die von der Verbindung durchlaufenen Koppelvielfache und Zwischenleitungen, sowie die darin jeweils belegten Kanäle. Diese Vermittlungsdaten werden mit Hilfe des Zentralsteuerwerkes, das also u.a. auch die Funktion einer Wegesucheinrichtung nebst Belegungsspeicher ausübt, erarbeitet und zur Koppelfeldeinstelleinrichtung KE des Koppelfeldes K übertragen. Der die Vermittlungsdaten übertragende Datenfluss vom Zentralsteuerwerk ZW zur Koppelfeldeinstelleinrichtung KE verläuft über eine mit dem Zentralsteuerwerk über eine zentrale Datenleitung D verbundene Puffereinrichtung MB, die einer Zwischenspeicherung und Umcodierung von Daten sowie einer Anpassung der Übertragungsgeschwindigkeiten dient. Die Puffereinrichtung kann auf einen Teil dieser Funktionen oder auf jeweils nur eine dieser Funktionen beschränkt sein. Eine solche Puffereinrichtung ist z. B. in der DE-PS-15 37 849 ausführlich beschrieben.

Außer dem zentralen Steuerwerk ZW ist eine größere Anzahl von dezentralen Steuereinrichtungen GP1 bis GPn dargestellt, die jeweils den Anschlußgruppen LTG1 bis LTGn individuell zugeordnet sind. Diese Steuereinrichtungen dienen zur Durchführung sämtlicher Schaltvorgänge innerhalb jeder der genannten Anschlußgruppen. Zu diesen Schaltvorgängen gehören insbesondere sämtliche Vermittlungsvorgänge innerhalb dieser Anschlußgruppen. Weitere Einzelheiten hierüber können der bereits angegebenen DB-A-28 26 113 entnommen werden.

Die dezentralen Steuereinrichtungen GP1 bis GPn stehen mit dem zentralen Steuerwerk ZW über Datenkanäle in Verbindung, die einzeln pro dezentrale Steuereinrichtung über das Koppelfeld (K) bis zur Puffereinrichtung MB durchgeschaltet sind. Von dieser Puffereinrichtung, und zwar von ihrem Datenkopf ML, führt also je ein eigener Datenkanal zu jeder der dezentralen Steuereinrichtungen. Hierzu ist die Puffereinrichtung MB mit ihrem Datenkopf ML über eine Zeitmultiplexleitung m an einen der Koppelfeldanschlüsse angeschlossen. Die Puffereinrichtung ist an einen der Koppelfeldanschlüsse des Koppelfeldes in der gleichen Weise angeschlossen, wie jede der genannten Anschlußgruppen LTG1 bis LTGn. Die Zeitmultiplexleitung m ist also an einen Koppelfeldanschluß angeschaltet, der einen Zeitmultiplexeingang zu einem Raumlagen-Zeitlagen-Vielfach der ersten Koppelstufe und einen Zeitmultiplexausgang von einem Raumlagen-Zeitlagen-Vielfach der letzten Koppelstufe umfaßt. Die Zeitmultiplexeinrichtung m ist also an einen Koppelfeldanschluß wie den mit A bezeichneten angeschaltet.

Jede Datenverbindung zwischen dem Datenkopf einer Puffereinrichtung und einer jeden der Anschlußgruppen, z. B. der Anschlußgruppe LTG1, umfaßt einen Kanal zur Übertragung von Daten von der Puffereinrichtung zur betreffenden Anschlußgruppe und einen weiteren Kanal zur Übertragung von Daten in der umgekehrten Richtung. Diese beiden Datenkanäle führen zu und von der der betreffenden Anschlußgruppe individuell zugeordneten dezentralen Steuereinrichtung.

Die Herstellung und die Aufrechterhaltung der erläuterten Datenverbindungen über das Koppelfeld K erfolgt mit Hilfe der Koppelfeldeinstelleinrichtung KE in der gleichen Weise wie die Herstellung und die Aufrechterhaltung von Nachrichtenverbindungen, z. B. Fernsprechverbindungen. Hierzu sind in an sich bekannter Weise den Koppelvielfachen des Koppelfeldes K Haltespeicher zugeordnet, in die die jeweils ein Koppelvielfach betreffenden Vermittlungsdaten eingespeichert werden. Mit Hilfe dieser Haltespeicher wird bewerkstelligt, dass in den jeweiligen Zeitlagen die erforderlichen Durchschaltungen zur Verfügung stehen bzw. die erforderlichen Schreibvorgänge sowie Lesevorgänge für die Vollspeicher der Zeitlagenvielfache stattfinden. Alle weiteren Einzelheiten, die Aufbau und Arbeitsweise einer Zeitmultiplexkoppelanordnung betreffen, werden hier als bekannt vorausgesetzt und deshalb nicht weiter im einzelnen beschrieben.

Wie erläutert, werden die zur Herstellung von Nachrichtenverbindungen erforderlichen Vermittlungsdaten vom Zentralsteuerwerk über die Puffereinrichtung MB zur Koppelfeldeinstelleinrichtung KE übertragen. Hierzu dient u.a. ein Datenkopf MK, der der Puffereinrichtung MB zugeordnet ist. Der Vollständigkeit halber sei an dieser Stelle hinzugefügt, dass mit einer Puffereinrichtung MB auch eine Mehrzahl von Koppelfeldeinstelleinrichtungen KE verbunden sein kann. Diese mehreren Koppelfeldeinstelleinrichtungen können einzeln mehreren Koppelfeldteilen eines grösseren Koppelfeldes zugeordnet sein. Es ist auch möglich, je eine Koppelfeldeinstelleinrichtung pro Koppelstufe vorzusehen.

Da die weiter oben beschriebenen Datenverbindungen zwischen der Puffereinrichtung MB über die Zeitmultiplexleitung m zu jeder der Anschlussgruppen LTG1 bis LTGn mit Hilfe des Koppelfeldes K durchgeschaltet sein müssen, bevor der Aufbau von Nachrichtenverbindungen, z. B. Fernsprechverbindungen, begonnen werden kann, steht für die Herstellung dieser Datenverbindungen in der Regel ein völlig freies Koppelfeld zur Verfügung, also ein Koppelfeld, in dem sämtliche Kanäle unbelegt sind. Deshalb kann der Aufbau der Datenverbindungen nach einem willkürlich festgelegten Schema erfolgen, das für alle Zeiten unverändert bleibt. Deshalb ist vorgesehen, dass die Koppelfeldeinstelleinrichtung KE ausserdem in einem ihr zugeordneten Speicher V Einstelldaten, d.h. also die Vermittlungsdaten, für die Datenkanäle gespeichert enthält. Diese Vermittlungsdaten brauchen also bei einem Neuaufbau der Datenverbindungen nicht jeweils vom zentralen Steuerwerk ZW neu erarbeitet zu werden und nicht über die Puffereinrichtung MB erneut übertragen zu werden. Sind die zwischen der Puffereinrichtung MB und den Anschlussgruppen LTG1 bis LTGn, d.h. ihren dezentralen Steuereinrichtungen GP1 bis GPn, erforderlichen Datenverbindungen über das Koppelfeld K neu herzustellen, so gibt das zentrale Steuerwerk ZW lediglich einen entsprechenden Befehl an die Puffereinrichtung MB ab, den sie an die Koppelfeldeinstelleinrichtung KE weitergibt, und aufgrund deren diese die in ihrem Speicher V gespeicherten Vermittlungsdaten entnimmt, um in an sich bekannter Weise die erforderlichen Vermittlungsvorgänge einzeln nacheinander auszuführen.

Nachdem die bisherige Beschreibung die erfindungsgemäss gestaltete Zeitmultiplex-Fernsprechvermittlungsanlage in allgemeineren Zusammenhängen beschrieben hat, wendet sie sich nunmehr den erfindungsgemässen Zusammenhängen zu.

Wie in der bereits genannten DE-A-2 826 113 erläutert ist, werden über den Zeitkanalkoppler TSU der Anschlussgruppe LTG1 ausser Nachrichtenverbindungen von und zu Teilnehmerstellen sowie Verbindungsleitungen auch die bereits erwähnten Datenverbindungen zwischen den den Anschlussgruppen, z. B. LTG1, zugeordneten dezentralen Steuereinrichtungen, z. B. GP, einerseits und dem zentralen Steuerwerk ZW andererseits hergestellt. Diese Datenverbindungen verlaufen, wie bereits dargelegt, weiterhin über das Koppelfeld K und die Zeitmultiplexleitung m.

Wie bereits ausgeführt wurde, sind die Gruppensteuerwerke GP1 bis GPn dezentrale oder teilzentrale Steuereinrichtungen im Vergleich zum zentralen Steuerwerk ZW. Insgesamt werden diese teilzentralen Steuerwerke und das zentrale Steuerwerk auch aus Schaltwerke bezeichnet. Die Gruppensteuerwerke und das zentrale Steuerwerk weisen eine hinsichtlich der Informationskapazität begrenzte Leistungsfähigkeit auf. Ein besonderes Problem stellt die Leistungsfähigkeit des zentralen Steuerwerkes dar.

Wie ebenfalls bereits angedeutet wurde, ist außer dem zentralen Koppelfeld K eine Anzahl von Anschlußgruppen LTG1 bis LTGn vorgesehen. Jede dieser Anschlußgruppen ist je über eine PCM-Leitung, z. B. ltg1, an einen Eingang des Koppelfeldes K in der beschriebenen Weise angeschlossen. Diese PCM-Leitung pro Anschlußgruppe führt innerhalb derselben zu einer Durchschalteeinrichtung TSU, deren Bedeutung und Funktionsweise in der bereits genannten DE-A-2 826 113 genauer beschrieben wird. Bei dieser Durchschalteanordnung handelt es sich um ein Teilkoppelfeld, über das sowohl die genannten Datenverbindungen als auch die Verbindungen von und zu Teilnehmern und von und zu Verbindungsleitungen durchgeschaltet werden. Unter "Verbindungsleitungen" sind selbstverständlich auch Kanäle von angeschlossenen PCM-Verbindungsleitungen zu verstehen. Der Anschluß dieser Teilnehmerleitungen, Verbindungsleitungen und Kanäle ist den bereits genannten Literaturstellen zu entnehmen.

Über eingangsseitig an eine Anschlußgruppe angeschlossene Teilnehmerleitungen, Verbindungsleitungen und Kanäle treffen verschiedenerlei Informationen ein, z. B. Anrufsignale von Teilnehmerstationen, die eine Verbindung herzustellen wünschen, ferner Wahlkennzeichen von diesen Teilnehmerstellen, aber auch über Verbindungsleitungen und Kanäle, ferner Leitungszeichen über Verbindungsleitungen sowie in Zuordnung zu Kanälen. Das Gruppensteuerwerk dient in an sich bekannter Weise zur Abwicklung der Aufnahme solcher eintreffender verbindungsindividueller Informationen. Ein Gruppensteuerwerk nimmt außerdem eine Verarbeitung oder eine Vorverarbeitung dieser aufgenommenen Informationen jeweils in Zuordnung zu der betreffenden Teilnehmerleitung, Verbindungsleitung oder zu dem betreffenden Kanal vor. Außerdem werden einige solcher Informationen in dem dem Gruppensteuerwerk jeweils individuell zugeordneten Speichern SP zwischengespeichert und zwar mit Hilfe einer Eingabe-Ausgabe-Einrichtung IOP. Ferner hat das Gruppensteuerwerk die Aufgabe, Signale und Steuersignale über diese Leitungen (Teilnehmerleitungen und Verbindungsleitungen, sowie Kanäle) zur Aussendung zu bringen, z. B. Aufwechselstromimpulse, Hörtonsignale, Wahlkennzeichen sowie Leitungszeichen und dergleichen.

Über das einer Anschlußgruppe zugehörige Teilkoppelfeld werden Verbindungen hinsichtlich der Verbindungsaufbaurichtung sowohl ankommend von einer Leitung (Teilnehmerleitung, Verbindungsleitung bzw. ein entsprechender Kanal) zum zentralen Koppelfeld K hin als auch von diesem abgehend zu einer solchen Leitung durchgeschaltet. Bei einer Verbindungsherstellung erfolgt zunächst eine Durchschaltung z. B. von einer Teilnehmerleitung über die betreffende Anschlußgruppe zum zentralen Koppelfeld K. Die für die weitere Durchschaltung der betreffenden Verbindung über dieses Koppelfeld erforderlichen Daten werden vom Gruppensteuerwerk über die betreffende, bereits erwähnte Datenverbindung zum Zentralsteuerwerk ZW übertragen. Die weitere Verbindungsdurchschaltung erfolgt über eine Anschlußgruppe (gegebenenfalls dieselbe Anschlußgruppe, in der Regel aber eine andere Anschlußgruppe) wozu das betreffende Gruppensteuerwerk der jeweiligen Anschlußgruppe tätig werden muß.

Für ein Gruppensteuerwerk gibt es also hinsichtlich der Verbindungsaufbaurichtung Durchschaltevorgänge verschiedener Art, und zwar einerseits Durchschaltungen von einer Teilnehmerleitung oder Verbindungsleitung (oder einem entsprechenden Kanal) zum Koppelfeld K hin und andererseits Durchschaltungen in umgekehrter Richtung. Die Durchschaltungen über ein Teilkoppelfeld unterscheiden sich außerdem in solche von und zu Teilnehmerleitungen einerseits und von und zu Verbindungsleitungen (bzw. Kanälen) andererseits. Die im Zusammenhang dieser jeweils beiden pro Verbindung erforderlichen Durchschaltevorgänge durchgeführten Informationsaufnahmevorgänge und/oder Informationsabgabevorgänge nehmen wenigstens je einmal pro Durchschaltevorgang däs jeweilige Gruppensteuerwerk in Anspruch. Die jeweilige Art der Durchschaltung (ankommend oder abgehend von oder zu Teilnehmerleitung oder Verbindungsleitung) ist maßgebend für die mit der jeweiligen Ananspruchnahme des Gruppensteuerwerks zwangsläufig verbundene Informationsverarbeitungs-Verkehrsbelastung pro Durchschaltevorgang - wie bereits ausgeführt wurde, werden von den Gruppensteuerwerken die Informationen, die sie im Zusammenhang mit einem Durchschaltevorgang aufnehmen, unverändert oder vorverarbeitet an das ihnen gemeinsame zentrale Steuerwerk weitergeleitet. Ebenso gibt auch das zentrale Steuerwerk Informationen an die Gruppensteuerwerke aus, um darin erforderliche abgehende Durchschaltungen durchzuführen und Signale und Steuersignale über die betreffenden Leitungen (Teilnehmerleitungen und Verbindungsleitungen bzw. Kanäle) abzugeben. Die pro Verbindungsherstellung von einem Gruppensteuerwerk an das zentrale Steuerwerk zu übertragenden Informationen stellen also jeweils eine Informationsportion begrenzten Umfanges dar; der jeweilige Umfang einer Informationsportion ergibt sich aus der jeweiligen Art der Verbindungsherstellung.

Jeder Anruf seitens einer Teilnehmerstelle und jede ankommende Belegung einer Verbindungsleitung (bzw. eines entsprechenden Kanales) erfordert also vom betreffenden Gruppensteuerwerk eine bestimmte Arbeitsleistung. Jede solche Arbeitsleistung wird anhand eines Initial-Schaltkennzeichens für das jeweilige Gruppensteuerwerk erkennbar. Ein solches Initial-Schaltkennzeichen ist bei einer Teilnehmerleitung mit Schleifenimpulsgabe z. B. der Schleifenschluß, der das Anrufsignal darstellt. Ein solches Initial-Schaltkennzeichen ist bei einer Verbindungsleitung z. B. das c-Ader-Belegungssignal bei ankommender Belegung. Entsprechendes gilt für verbindungsindividuelle Kanäle. Diese Initial-Schaltkennzeichen sind also voneinander verschieden, und zwar je nach der betreffenden Art von Leitung (Teilnehmerleitung oder Verbindungsleitung). Im Zusammenhang mit der Durchschaltung eines Teilabschnittes einer herzustellenden Verbindung signalisieren sie jeweils ein entsprechendes Maß an für das betreffende Gruppensteuerwerk zu erwartender Informationsverarbeitungs-Verkehrsbelastung, insbesondere in Verbindung mit Aufnahme, Verarbeitung und/oder Abgabe von Informationen. Für die verschiedenen Teilabschnitte durchzuschaltender Verbindungen sind also bestimmte diesbezügliche Maße typisch, die bei gleichartigen Teilabschnitten einer durchzuschaltenden Verbindung gleich, bei den verschiedenen Teilabschnitten aber unterschiedlich sind. Was für jedes der Gruppensteuerwerke gilt, gilt in entsprechender Weise auch für das zentrale Steuerwerk ZW. Je nach dem, ob es sich bei einer über das Koppelfeld K durchzuführenden Durchschaltung um eine Internverbindung, eine abgehende Fernverbindung oder eine ankommende Fernverbindung handelt, ist das Ausmaß der Informationsverarbeitungs-Verkehrsbelastung pro Durchschaltung für das zentrale Steuerwerk verschieden groß, und zwar je nach Art der jeweils herzustellenden Verbindung.

Die Beschreibung nimmt nun auch auf die Darstellung gemäß Fig. 2 Bezug. Hierin sind das Gruppensteuerwerk GP1 und GPn und das Zentralsteuerwerk ZW angedeutet, die auch in Fig. 1 dargestellt sind. Dem Gruppensteuerwerk GP1 ist ein Zähler Z zugeordnet. Entsprechendes gilt für die übrigen Gruppensteuerwerke. Jedes Mal, wenn ein Gruppensteuerwerk für eine Informationsaufnahme bei Anruf seitens eines Teilnehmers, der eine Verbindung herzustellen wünscht, in Anspruch genommen wird, oder wenn eine Verbindungsleitung (bzw. ein Kanal) zwecks Durchschaltung einer Verbindung über das betreffende Teilkoppelfeld belegt und das ihm entsprechende Gruppensteuerwerk für die Aufnahme von Wahlkennzeichen in Anspruch genommen wird, sowie für die Abwicklung der Durchschaltung über das betreffende Teilkoppelfeld, oder wenn eine Durchschaltung vom Koppelfeld zu einer abgehenden Verbindungsleitung (bzw. einem Kanal) oder zu einer Teilnehmerleitung hin durchzuführen ist und hierzu entsprechende Informationen vom Zentralsteuerwerk entgegenzunehmen sind, entsteht in dem betreffenden Gruppensteuerwerk ein Initial-Schaltkennzeichen, welches immer ein nachfolgendes Eintreffen einer zu verarbeitenden Information ankündigt.

Ein Gruppensteuerwerk gibt nun immer bei Vorliegen eines solchen Initial-Schaltkennzeichens ein Steuersignal an den ihm zugeordneten Zähler Z ab, und zwar über eine der Steuerleitungen x1, x2 oder x3. Je nach dem, welcher Art die dem Gruppensteuerwerk anschließend erwachsende Informationsverarbeitungs-Verkehrsbelastung ist, wird das Steuersignal über die Steuerleitung x1 oder die Steuerleitung x2 oder die Steuerleitung x3 vom Gruppensteuerwerk zum Zähler Z gegeben. Mit Hilfe dieser Steuerzeichen wird der Zähler Z um einige Schritte vorwärtsgeschaltet. Die Vorwärtsschaltung und eine Rückwärtsschaltung des Zählers hat jeweils zur Folge, daß eines seiner Zählglieder z1 bis z10 markiert ist. Bei Vorwärtsschaltung des Zählers schreitet die Markierung in aufsteigendem Sinne hinsichtlich der Nummerierung der Bezeichnungen der Zählglieder fort und bei Rückwärtsschaltung schreitet die Markierung in entgegengesetztem Sinne fort. Die Anzahl der Schritte, um die der Zähler Z bei jedesmaligem Erhalt eines Initial-Schaltkennzeichens vorwärtsgeschaltet wird, hängt u.a. ab von dem jeweiligen Maß an für das Gruppensteuerwerk zu erwartender Informationsverarbeitungs-Verkehrsbelastung. Demgemäß trifft das Initial-Schaltkennzeichen jeweils über eine bestimmte der Steuerleitungen x1 bis x3 ein, wodurch die Zahl der Vorwärtsschritte für den Zähler Z mitbestimmt ist. "Mitbestimmt" bedeutet hier, daß die Anzahl der Vorwärtsschritte bei Eintreffen eines Initial-Schaltkennzeichens nicht alleine davon abhängig ist, über welche der Steuerleitungen x1 bis x3 das Initial-Schaltkennzeichen eintrifft. Sondern hierfür ist außerdem auch noch eine über Wertigkeitsleitungen w1 bis w3 übertragene Wertigkeitsangabe maßgebend.

Der Zähler Z eines Gruppensteuerwerkes dient zur Ermittlung der Informationsverarbeitungs-Verkehrsbelastung des jeweiligen Gruppensteuerwerkes, zur Erkennung von Informationsverarbeitungs-Verkehrsüberlastungen und zur Abwehr solcher Überlastungen. Da nun alle Verbindungen nicht nur über ein Teilkoppelfeld sondern immer auch über das zentrale Koppelfeld durchgeschaltet werden, hat jede Inanspruchnahme eines Gruppensteuerwerks auch eine Inanspruchnahme des zentralen Steuerwerks zur Folge. Folglich betrifft die Ermittlung der Informationsverarbeitungs-Verkehrsbelastung jeweils eines Gruppensteuerwerkes, die Erkennung von Informationsverarbeitungs-Verkehrsüberlastungen für dieses Gruppensteuerwerk und die Abwehr solcher Überlastungen von diesem Gruppensteuerwerk zugleich auch die Informationsverarbeitungs-Verkehrsbelastung des zentralen Steuerwerks, Informationsverarbeitungs-Verkehrsüberlastungen für dasselbe und die Abwehr solcher Überlastungen von dem zentralen Steuerwerk. Denn die diesbezügliche Zählereinstellung der Zähler jedes der Gruppensteuerwerke (Abwehr von Überlastungen) wirkt sich auch in der Informations-Verkehrsbelastung des zentralen Steuerwerkes aus und trägt jeweils zur Abwehr solcher Überlastungen vom zentralen Steuerwerk bei. Bekanntlich stellt bei einem Zusammenspiel von Gruppensteuerwerken und einem zentralen Steuerwerk dessen Informationsverarbeitungs-Verkehrsbelastung den typischen Engpaß dar; von besonderer Wichtigkeit ist deshalb die Abwehr von Informationsverarbeitungs-Verkehrsüberbelastungen vom zentralen Steuerwerk.

Für die Gruppensteuerwerke und für das zentrale Steuerwerk wurde bisher auch der gemeinsame Begriff "Schaltwerke" benutzt, anschließend gemeinsam auch als "Steuerwerke" bezeichnet. Die Belastbarkeit eines jeden solchen Steuerwerkes hängt grundsätzlich von seinem Aufbau (Struktur und Programmabwicklung) und von der Art und dem Umfang der ihm laufend übertragenen Informationsverarbeitungsvorgänge ab.

Die Erfahrung lehrt nun, daß z.B. die Zusammensetzung von Informationsverarbeitungsvorgängen verschiedener Art sich während des Betriebes eines Steuerwerkes verschieben kann. So kann es z. B. sein, daß zu bestimmten Tageszeiten überwiegend Ortsverbindungen herzustellen sind, während zu bestimmten anderen Tageszeiten überwiegend Fernverbindungen herzustellen sind. Ferner kann es sein, daß zu bestimmten Tageszeiten mehr Kurzzeitgespräche stattfinden und zu anderen Tageszeiten mehr Langzeitgespräche. Ferner kann es sein, daß zu bestimmten Tageszeiten mehr Sonderdienste in Anspruch genommen werden als zu anderen Tageszeiten. Folglich ist die Belastbarkeit eines solchen Steuerwerks nicht konstant. Um ein Steuerwerk optimal auszulasten, ist es deshalb zweckmäßig, die zu den verschiedenen Betriebszeiten aufgrund der unterschiedlichen Voraussetzungen gegebenen Belastbarkeiten zu berücksichtigen. Deshalb ist es gebräuchlich, solche Steuerwerke mit Meßeinrichtungen zur Bestimmung der Belastbarkeit auszustatten, die die stets schwankende Belastung über Zeiträume integrieren, die jeweils groß genug sind, um ein Bestimmungsergebnis mit ausreichender Ergebnisgenauigkeit zu gewährleisten, also Kurzzeitschwankungen nicht zum Tragen kommen zu lassen. Eine solche Meßeinrichtung kann z. B. auf der Basis arbeiten, daß ein jedes Steuerwerk bei jeweiliger Abarbeitung sämtlicher vorliegender Informationsverarbeitungsaufträge ein Anforderungssignal erzeugt, das u.a. dieser Meßeinrichtung zugeführt wird. Diese Meßeinrichtung zählt nun über bestimmte Zeiträume hinweg, z. B. über eine Sekunde oder 3 Sekunden hinweg die Anzahl solcher aufgetretener Anforderungssignale im betr. Steuerwerk.

In Fig. 2 ist eine pro Gruppensteuerwerk (GP1-GPn) vorgesehene und mit diesem (über m) verbundene solche Meßeinrichtung mit M bezeichnet. Sie erhält über eine Meßleitung m das Anforderungssignal bei seinem jedesmaligen Auftreten. Die Meßeinrichtung zählt in an sich bekannter Weise die Anforderungssignale ab. Von einer zentralen Zeitgebereinrichtung r erhält sie über eine Untersetzereinrichtung U ein Beginnzeichen und ein Endezeichen, also zwei Zeitmarkierungen, die den Meßzeitraum markieren. Die Meßeinrichtung ermittelt nun die Anzahl der zwischen zwei solchen Zeitmarkierungen eintreffenden Anforderungssignale des jeweiligen Gruppensteuerwerkes. Sie überträgt diese Anzahl an eine Vergleichseinrichtung W, in der ein Konstantwert gespeichert ist, mit dem die Vergleichseinrichtung die Angabe über die Anzahl von Anforderungssignalen vergleicht. Es sei angenommen, daß hinsichtlich der Belastbarkeit drei verschiedene Bestimmungsergebnisse vorgesehen sind. Diese Anzahl ist keineswegs bindend, sondern kann auch größer gewählt werden. Die Vergleichseinrichtung W gibt also nach Ablauf eines jeden Meßzeitintervalls der Meßeinrichtung M ein Bestimmungsergebnis bezüglich der Belastbarkeit des Steuerwerkes ab, das den tageszeitlichen Betriebsverhältnissen entspricht.

Eine Belastbarkeitmessung ist für jedes der Gruppensteuerwerke GP1 bis GPn einzeln vorgesehen. Es ist aber ebenso oder auch darüberhinaus möglich, eine solche Belastbarkeitsmessung für das zentrale Steuerwerk vorzusehen. Ferner kann vorgesehen werden, daß ein Belastbarkeitsmessung nur beim zentralen Steuerwerk vorgesehen wird, und daß die dabei gewonnenen Bestimmungsergebnisse in Form der Wertigkeitsangaben von einer dem zentralen Steuerwerk zugeordneten Meßeinrichtung an die den Gruppensteuerwerken zugeordneten Zähler Z angegeben werden.

Das die tageszeitlich bedingte Belastbarkeit des jeweiligen Steuerwerkes betreffende und jeweils in der beschriebenen Weise laufend wiederholt ermittelte Bestimmungsergebnis ist ein dreifaches und besteht demgemäß immer aus drei verschiedenen Wertigkeitsangaben. Jede Wertigkeitsangabe kann - je nach der momentan gegebenen Belastbarkeit des Steuerwerkes (unter "Belastbarkeit" sei hier die Anzahl der pro Meßzeitraum von dem betreffenden Steuerwerk abwickelbaren Arbeitsvorgänge, z. B. Rechenoperationen, Steuerungsvorgänge u.dgl., verstanden) - verschiedene Werte annehmen. Für die Übertragung jeder der drei Wertigkeitsangaben sind drei einzelne Wertigkeitsleitungen w1 bis w3 vorgesehen, über die diese Wertigkeitsangaben zu drei Wertigkeitsspeichergliedern v1 bis v3 übertragen werden. Die drei verschiedenen Wertigkeitsangaben pro Belastbarkeitsmessung sind außerdem den drei erwähnten Steuerleitungen x1 bis x3 individuell zugeordnet, von denen immer eine jeweils ein Initial-Schaltkennzeichen vom Gruppensteuerwerk zum Zähler Z überträgt und dadurch anzeigt, welcher jeweiligen Art und dementsprechend von welchem Umfang die mit dem grade übertragenen Initial-Schaltkennzeichen erwartende und auf das Gruppensteuerwerk zu kommende Arbeitsbelastung zur Verarbeitung der dem Initial-Schaltkennzeichen zugeordneten eintreffenden Informationen ist (s.o.!). In diesem Zusammenhang kann zur Bezeichnung dieser jeweiligen Art von drei verschiedenen Initial-Schaltkennzeichen gesprochen werden, denen die drei Steuerleitungen x1 bis x3 zugeordnet sind. Jedem dieser drei verschiedenen möglichen Initial-Schaltkennzeichen ist je eine der drei Wertigkeitsangaben zugeordnet, von denen der einzelne Wert einer jeden etwas über die Belastbarkeit des betreffenden Steuerwerkes sagt, jeweils unter Bezugnahme auf die mit jedem der eintreffenden Initial-Schaltkennzeichen angezeigte Art und den entsprechenden Umfang von auf das Steuerwerk zu kommender Arbeitsbelastung.

Die drei pro Meßzeitraum ermittelten Wertigkeiten geben nun die Anzahl der Zählschritte pro Vorwärtsschaltung des Zählers an, die bei Eintreffen eines Initial-Schaltkennzeichens vom Zähler auszuführen sind. Die Anzahl der Zählschritte, die der Zähler aufgrund eines Initial-Schaltkennzeichens vorwärtsschaltend ausführt, ist also sowohl vom jeweiligen Initial-Schaltkennzeichen als auch vom jeweiligen Bestimmungsergebnis der Belastbarkeitsmessung abhängig.

Die bereits erwähnte Rückwärtsschaltung des Zählers erfolgt in gleichmäßigen Zeitabständen. Hierzu wird jedem der Zähler von der zentralen Zeitgebereinrichtung r in gleichmäßigen Zeitabständen ein Rückwärtsschaltimpuls zugeführt, bei dem also der Zähler jeweils um einen Schritt rückwärts geschaltet wird.

Es sei nun angenommen, daß dann, wenn der Zähler seinen fünften Zählschritt erreicht, wenn also sein Zählglied z5 markiert ist, Teilnehmeranrufe abgewiesen werden sollen. Das bedeutet also, daß in dieser Betriebssituation Teilnehmer, die an ihrer Teilnehmerstation den Hörer abheben und damit das Anrufsignal abgeben, nicht die Möglichkeit haben sollen, Wählkennzeichen wirksam abzugeben. In einem solchen Betriebszustand ist also das Gruppensteuerwerk dagegen gesperrt, Wählkennzeichen und im Anrufzustand befindlichen Teilnehmerstellen rufender Teilnehmer aufzunehmen und abzuspeichern. In Verbindung hiermit kann vorgesehen sein, daß in diesem Betriebszustand denjenigen Teilnehmerstellen, die sich im Anrufzustand befinden, Besetztsignal ausgesendet wird. Die Markierung des Zählgliedes z5 entspricht also hinsichtlich der Vorwärtszählung und der Rückwärtszählung des Zählers einem Grenzwert; bei dessen Überschreitung durch Vorwärtszählung des Zählers besteht im Zähler ein Überlastkriterium bis zum Wiedererreichen des Grenzwertes durch die einzelnen Schritte der Rückwärtszählung. Dadurch, daß also die Vorwärtszählung aufgrund eines Initial-Schaltkennzeichens einerseits die für das betreffende Gruppensteuerwerk und ebenso für das Zentralsteuerwerk zu erwartende Informationsverarbeitungs-Verkehrsbelastung und andererseits die gegenwärtige Belastbarkeit des zentralen Steuerwerks berücksichtigt, und zwar durch die Anzahl der bei der jeweiligen Vorwärtsschaltung ausgeführten Zählschritte, sowie dadurch, daß die Rückwärtsschaltung des Zählers mit konstanter Geschwindigkeit erfolgt, wird bewerkstelligt, daß eine Aufnahme von Wählkennzeichen durch das Gruppensteuerwerk für einen bestimmten Zeitraum unterbunden ist, der der Verarbeitungszeit der zuletzt aufgenommenen Wählinformationen entspricht.

Dieser Zeitraum ist also durch die jeweilige Wertigkeit bestimmt, die für das betreffende Initial-Schaltkennzeichen in dem betreffenden Wertigkeitsspeicherglied (v1, v2 oder v3) gespeichert ist.

In dem Zähler Z findet also eine Kumulation der Initial-Schaltkennzeichen statt. Erreicht der Zähler den Grenzwert, den das Zählglied z5 repräsentiert, so besteht in der Markierung dieses Zählgliedes oder eines zählerwertigen Zählgliedes ein Überlastkriterium. Dieses wird über die Überlastleitung 5 an das Gruppensteuerwerk übertragen. Es wird also zwischen einem zum Erreichen des Grenzwertes führenden Initial-Schaltkennzeichen und einem ersten von ihm zugeordneten Zeichen einer entsprechenden Information, also eintreffenden Wählkennzeichen gebildet und führt dazu, daß diese Zeichen von dem betreffenden Gruppensteuerwerk nicht aufgenommen werden; zugleich kann die Einschaltung des Besetztsignales für den betreffenden Teilnehmer vorgenommen werden, so daß ihm mittels Hörsignal angezeigt wird, daß eine Abgabe von Wählkennzeichen erfolglos bleibt. Die Übertragung des Überlastkriteriums über die Leitung 5 unterbindet also die Aufnahme von Wählkennzeichen von anrufenden Teilnehmern. Nach einer anderen Version ist vorgesehen, der Übertragung des Überlastkriteriums vom Zähler zum Gruppensteuerwerk die Wirkung zu geben, daß für die Dauer des Bestehens des Überlastkriteriums weitere Initial-Schaltkennzeichen und ihm entsprechende eintreffende Informationen, z. B. Wählkennzeichen nicht angenommen werden, daß aber diejenige Information, deren vorausgehendes Initial-Schaltkennzeichen dazu geführt hat, daß das Überlastkriterium gebildet wurde, noch angenommen wird. In diesem Falle wird also immer dann, wenn ein Initial-Schaltkennzeichen noch angenommen wurde, auch die ihm zugeordnete Information noch angenommen; nur es werden dann weitere Initialschaltkennzeichen und die ihnen zugeordneten Informationen nicht mehr angenommen.

Wie der Zeichnung Fig.2 zu entnehmen ist, ist auch noch eine weitere Überlastleitung 7 vorgesehen. Ein Überlastkriterium wird über diese Überlastleitung nur übertragen, wenn der Zähler einen entsprechend höheren Zählerstand erreicht. Entsprechendes gilt für die Überlastleitung 10. Es sei nun angenommen, daß ein über die Überlastleitung 5 übertragenes Überlastkriterium dazu dient, das Gruppensteuerwerk zu veranlassen, von anrufenden Teilnehmern keine Wahlkennzeichen anzunehmen, und ein über die Überlastleitung 7 übertragenes Überlastkriterium dazu dient, auch über ankommend belegte Verbindungsleitungen eintreffende Wahlkennzeichen nicht mehr anzunehmen. Da der Zählerstand des Zählers die augenblickliche Belastung des Gruppensteuerwerks anzeigt, wird bei einem dem Zählglied z5 entsprechenden Belastungsgrad die Annahme von Wählkennzeichen von anrufenden Teilnehmern gesperrt, dagegen die Annahme von Wählkennzeichen von ankommend belegten Verbindungsleitungen erst bei einem höheren Belastungszustand. Bei einem noch höheren Belastungszustand kann auch die Annahme von Informationen verhindert werden, die das Gruppensteuerwerk vom Zentralsteuerwerk entgegennehmen soll.

Es ist also festzustellen, daß die Ermittlung der Verkehrsbelastung und die Erkennung von Überbelastungs-Situationen in den Gruppensteuerwerken mittels in oder bei ihm vorgesehenen und die Fälle der Inanspruchnahme des Gruppensteuerwerks erfassenden Zählers erfolgt; die Ermittlung der Verkehrsbelastung und die Erkennung von Überbelastungen erfolgt also an dezentraler Stelle. Zur Abwehr von Informationsüberbelastungen bewirkt das von dem Zähler erzeugte Überlastkriterium über die Überlastleitungen 5 und 7, daß die Inanspruchnahme des Gruppensteuerwerks zwecks Aufnahme von Informationen für diejenigen Durchschaltungen über das Teilkoppelfeld der betreffenden Anschlußgruppe verhindert ist die solche der ankommenden Art sind. Durchschaltungen vom Koppelfeld K zu einer Verbindungsleitung oder zu einer Teilnehmerleitung können dagegen noch abgewickelt werden, obwohl über die Überlastleitungen 5 und 7 das Überlastkriterium bereits ansteht. Erst wenn das Überlastkriterium auch über die Überlastleitung 10 zum Gruppensteuerwerk übertragen wird, werden auch Durchschaltungen der abgehenden Art nicht mehr ausgeführt, indem bei Erreichen eines solchen Betriebszustandes das betreffende Gruppensteuerwerk gegen die Aufnahme entsprechender Informationen gesperrt ist. Die Überlastleitung 10 dient also zur Übertragung eines Überlastblockierkriteriums durch dasselbe wird nicht nur eine Annahme von Informationen vom Zentralsteuerwerk verhindert, sondern es kann darüber hinaus vorgesehen sein, daß auch eine Abgabe von Informationen an das betreffende Gruppensteuerwerk verhindert ist, insbesondere die Abwicklung von Durchschaltevorgängen innerhalb einer Anschlußgruppe.

Es sei auch noch betont, daß die Ermittlung der Verkehrsbelastung und die Erkennung von Überbelastungs-Situationen in den Gruppensteuerwerken, also in teilzentralen Schalteinrichtungen erfolgt. Den darin vorgesehenen an sich bekannten Zählern werden nicht Überlastsignale zugeführt, sondern Initial-Schaltkennzeichen, die die Vorwärtsschaltung der Zähler entsprechend der jeweiligen Wertigkeit bewerkstelligen. Die Überlastsignale werden also nicht den Zählern zugeführt, sondern von ihnen erzeugt. Die die Verkehrsbelastung betreffenden Steuersignale, die den Zählern zugeführt werden, sind also nicht Überlastsignale, sondern solche Steuersignale, die den Beginn jeweils einer in einem teilzentralen Gruppensteuerwerk empfangenen, in ihm zwischenzuspeichernden und an das zentrale Steuerwerk wieder abzugebenden Informationsportion darstellen. Wie bereits erläutert, sind diese Steuersignale Initial-Schaltkennzeichen. Diese Steuersignale können aber auch auf andere Weise gewonnen werden, und zwar aufgrund des Eintreffens eines ersten Wählkennzeichens einer Serie von Wählkennzeichen.

Die Anwendung der Erfindung ist nicht auf PCM-Fernsprechvermittlungsanlagen beschränkt, sondern kann auch in Fernmeldevermittlungsanlagen in Analogtechnik realisiert werden. Insbesondere in diesem Zusammenhang ist die Möglichkeit gegeben, daß ein Überlastsignal an diejenige verbindungsindividuelle Schalteinrichtung abgegeben wird, über die ein Initial-Schaltkennzeichen eingetroffen ist, welches zum Erreichen des Grenzwertes geführt hat. Das Überlastsignal bewirkt darin, daß die aus Initial-Schaltkennzeichen und Informations-Zeichen bestehenden, zu verarbeitenden Informationen, die in verbindungsindividuellen Schalteinrichtungen eintreffen, von hier nicht weitergegeben werden. Ebensogut ist es auch möglich, ein Überlastsignal in Zuordnung zu einer verbindungsindividuellen Schalteinrichtung an zentraler Stelle zu speichern und auf diese Weise zu bewirken, daß in der betreffenden verbindungsindividuellen Schalteintreffende Informationen nicht angenommen werden.

Ferner besteht die Möglichkeit, daß über eine verbindungsindividuelle Schalteinrichtung, an die ein Übersignal abgegeben wurde, oder für die ein Überlastsignal gespeichert wurde, ein Zeichen, insbesondere ein Hörzeichen ausgesendet wird, welches anzeigt, daß über die betreffende verbindungsindividuelle Schalteinrichtung Informationszeichen nicht empfangen werden. Hierbei handelt es sich vornehmlich um das Besetztzeichen.

Im Gegensatz zu bekannten Anordnungen erfolgt also die Ermittlung der für das zentrale Steuerwerk erwachsenden Informations-Verkehrsbelastung an dezentraler Stelle, und zwar nicht an einer einzigen dezentralen Stelle sondern in allen Gruppensteuerwerken. Hierzu werden die durch die DE-A-3 236 130 an sich bekannten Zähler verwendet. Im Gegensatz zu der darin beschriebenen Technik erfolgt die Ermittlung der Informations-Verkehrsbelastung und die Bildung von Überlastsignalen aber nicht auf andere Weise an zentraler Stelle, und es werden nicht die Überlastsignale von der zentralen Stelle zu den dezentralen Stellen hin übertragen, sondern den Zählern werden Initial-Schaltkennzeichen zugeführt, und die Überlastsignale werden von ihnen erzeugt, statt daß sie ihnen zugeführt werden. Dadurch, daß den Zählern Initial-Schaltkennzeichen zugeführt werden, und zwar an dezentraler Stelle, wird ein Zeitgewinn erzielt, durch eine entsprechend frühzeitige Überlastabwehr möglich ist. Der Überlastfall für ein zentrales Steuerwerk ist also gleichsam vorhersehbar und des können so frühzeitig Abwehrmaßnahmen getroffen werden, daß von vornherein verhindert werden kann, daß der Überlastfall überhaupt eintritt. Für diesen Zeitgewinn wird u.a. der zeitliche Abstand zwischen Initial-Schaltkennzeichen, die den Zählern zugeführt werden, und den den Initial-Schaltkennzeichen individuell zugeordneten Informationen (z. B. eintreffende Wählkennzeichen), die in ihrer Gesamtheit ursächlich sind für die auf das zentrale Steuerwerk zu kommende Informations-Verkehrsbelastung, mitausgenutzt. Ein bestehendes Überlastkriterium führt auch nicht zu einer allgemeinen Zufuhrsperre von Informationen für das zentrale Steuerwerk, sondern führt zur Abwehr einzelner Belegungen, z. B. durch Teilnehmeranruf verursachte Belegungen, die zufallsbedingt über das gesamte Verkehrsgeschehen verteilt sind. Es wird dadurch möglich, die Überlastabwehr sehr präzise zu gestalten und alsbald nach Abarbeitung einer aufgetretenen Verkehrs-Überbelastung die vorübergehend getroffenen Abwehrmaßnahmen wieder unwirksam zu machen. Durch die Maßnahme, daß die Überlastabwehrmaßnahmen sich nicht gleichmäßig auf alle Fälle der Inanspruchnahme der Gruppensteuerwerke auswirken, sondern in der beschriebenen Weise diese Fälle bezüglich ankommender Durchschaltungen und abgehender Durchschaltungen über ein einem Gruppensteuerwerk entsprechendes Teilkoppelfeld unterscheiden, wird erreicht, daß erstens die Überlastabwehrmaßnahmen sehr wirksam sind hinsichtlich der Begrenzung der Informationsverarbeitungs-Verkehrsbelastung, und daß zweitens vermieden wird, daß bereits geleisteter Arbeitsaufwand seitens einer teilzentralen Schalteinrichtung und seitens des zentralen Steuerwerks nachher wieder verworfen werden kann, und zwar wegen Abweisung einer Anforderung einer teilzentralen Gruppensteuerung zur Abwicklung einer abgehenden Durchschaltung, also für einen Vermindungsaufbau, für den bereits Informationsverarbeitung seitens des Gruppensteuerwerkes und seitens des zentralen Steuerwerks geleistet worden ist.

Sehr wesentlich ist in den erläuterten Zusammenhängen die Verwendung der durch die genannte DE-A-3 236 130 bekannten Zähler in einem neuen technischen Zusammenhang. Dadurch, daß diesen Zählern Informationen zugeführt werden, die den jeweiligen Umfang eines Vorwärtsschaltevorganges dieser Zähler nach Maßgabe einer Wertigkeit beeinflussen, die sich sowohl aus der Art der jeweils auf das Gruppensteuerwerk und auf das zentrale Steuerwerk zukommenden Informationsverarbeitungsaufgabe, als auch aus Ergebnissen der tageszeitlich bedingten Informationsverarbeitungs-Belastbarkeit des zentralen Steuerwerks ergeben, wird erreicht daß die auf das zentrale Steuerwerk zu kommende Verkehrsbelastung hochgradig optimal angepaßt ist an die Leistungsfähigkeit des zentralen Steuerwerkes. Durch Verwendung der an sich bekannten Zähler an dezentraler Stelle steht das jeweilige Maß der momentanen Verkehrsbelastung pro Gruppensteuerwerk immer sofort zur Verfügung. Es ist nicht - wie bekannt - erforderlich, daß jeweils über einen Ermittlungszeitraum hin die eintreffenden Belegungen gezählt werden, wodurch jeweils erst nach Ablauf eines solchen Ermittlungszeitraumes die während desselben aufgetretene Verkehrsbelastung greifbar werden würde, wodurch ein Ergebnis einer solchen Verkehrsbelastungsermittlung immer erst nach einer mittlerer Verzugszeit verfügbar wäre, die der Hälfte des Ermittlungszeitraumes entspricht. Diese bekannte Methode der Zählung in aufeinanderfolgenden Ermittlungszeiträumen macht es zudem erforderlich, daß die Ermittlungszeiträume jeweils groß genug gewählt werden müssen im Hinblick auf Zahl und Verteilung der zu zählenden Ereignisse, was bei Anwendung einer solchen bekannten Zählmethode an dezentraler anstatt zentraler Stelle dazu führen würde, daß die Ermittlungszeiträume noch entsprechend größer bemessen werden müßten. Diese Nachteile aber werden durch das beschriebene Ausführungsbeispiel auch vermieden.

Es kann also vorgesehen sein, daß das in einem Erreichen eines bestimmten Zählerstandswertes bestehende Überlastkriterium dazu führt, daß mit seinem Entstehen zwischen einen Initial-Schaltkennzeichen und den ihm zugehörigen eintreffenden Wahlinformationen eine Aufnahme der letzteren verhindert wird, oder daß diese noch aufgenommen werden, dagegen aber eine Aufnahme eines weiteren Initial-Schaltkennzeichens samt den zugehörigen Wahlinformationen verhindert wird. Beide Varianten sind realisierbar sowohl für den Fall, daß das Überlastkriterium im und vom Gruppensteuerwerk selbst verarbeitet wird, als auch für den Fall, daß es an eine verbindungsindividuelle Schalteinrichtung (z. B. Verbindungssatz) abgegeben wird. Das Überlastkriterium kann darin bestehen, daß ein bestimmtes Zählglied des Zählers Z markiert ist und ein entsprechendes Überlastsignal über eine der Leitungen 5, 7 oder 10 übertragen wird. Ebensogut ist es aber auch möglich, daß das Überlastkriterium dadurch entsteht, daß im umgekehrten Sinne eine entsprechende Zählglied-Markierung gelöscht wird, und daß dadurch eine Annahme weiterer Initial-Schaltkennzeichen bzw. Wahlkennzeichen verhindert ist.

## Patentansprüche

1. Schaltungsanordnung für Fernmeldeanlagen, insbesondere Fernsprechvermittlungsanlagen, mit zentralen und/oder teilzentralen informationsverarbeitenden Schaltwerken (ZW; GP1... GPn) mit einer hinsichtlich der Informations-Verarbeitungskapazität begrenzten Leistungsfähigkeit, und mit Einrichtungen (Z) zur Ermittlung der Informationsverarbeitungs-Verkehrsbelastung jeweils eines Schaltwerkes und zur Erkennung von Informationsverarbeitungs-Verkehrsüberlastungen und zur Abwehr solcher Überlastungen mittels Zählern (z1 - z10), die nach Maßgabe von die Verkehrsbelastung betreffenden Steuersignalen vorwärtsgeschaltet und in regelmäßigen, der Informations-Verarbeitungskapazität gemäßen Zeitabständen rückwärtsgeschaltet werden und einen Grenzwert erreichen, dadurch gekennzeichnet, daß die Steuersignale Initial-Schaltkennzeichen, insbesondere von diesen abgeleitete Steuerzeichen, sind, die jeweils ein nachfolgendes Eintreffen einer zu verarbeitenden Information ankündigen, und daß durch Kumulation dieser Zeichen mittels des Zählers (z1 - z10) bei Erreichen des Grenzwertes ein Überlastkriterium entweder zwischen einem zum Erreichen des Grenzwertes führenden Initial-Schaltkennzeichen und einem ersten von ihm zugeordneten Zeichen einer entsprechenden Information gebildet wird und dazu führt, daß diese Zeichen von dem betreffenden Schaltwerk nicht aufgenommen werden, oder nach Aufnahme eines Initial-Schaltkennzeichens gebildet wird und nach Aufnahme der ihm entsprechenden Information dazuführt, daß ein weiteres Initial-Schaltkennzeichen nicht aufgenommen wird.

2. Schaltungsanordnung nach Anspruch 1, dadurch gekennzeichnet, daß die aus Initial-Schaltkennzeichen und Informations-Zeichen bestehenden, zu verarbeitenden Informationen in verbindungsindividuellen Schalteinrichtungen eintreffen, und daß ein Überlastsignal an diejenige verbindungsindividuelle Schalteinrichung abgegeben oder in Zuordnung zu derjenigen verbindungsindividuellen Schalteinrichtung gespeichert wird, über die das Initial-Schaltkennzeichen eingetroffen ist, welches zum Erreichen des Grenzwertes geführt hat.

3. Schaltungsanordnung nach Anspruch 1, dadurch gekennzeichnet, daß in einer verbindungsindividuellen Schalteinrichtung durch ein Überlastsignal Hörzeichen-Sendeschaltmittel betätigt werden, welche dadurch signalisieren, daß über die betreffende verbindungsindividuelle Schalteinrichtung Informationszeichen nicht empfangen werden.

## Claims

1. A circuit arrangement for telecommunications systems, in particular telephone exchange systems, comprising central and/or sub-central information-processing switching units (ZW; GP1...GPn) whose call handling capacity is limited in respect of the information processing capacity, and comprising devices (Z) which serve to determine the information processing traffic loading of each switching unit, to recognise information processing traffic overloads, and to avert such overloads by means of counters (z1-z10) which are stepped forwards in accordance with control signals relating to the traffic load and are stepped backwards at regular intervals of time corresponding to the information processing capacity, and which reach a limit value, characterised in that the control signals are initial switching characteristics, in particualr control characteristics derived therefrom, which each announce the subsequent arrival of an item of information which is to be processed, and that as a result of the accumulation of these characteristics by means of the counter (z1-z10), when the limit value is reached an overload criterion is either formed between an initial switching characteristic, which leads to the reaching of the limit value, and a first character, assigned thereto, of a corresponding item of information and prevents these characters from being received by the respective switching unit, or is formed following the reception of an initial switching characteristic and, following the reception of the item of information corresponding thereto, prevents the reception of a further initial switching characteristic.

2. A circuit arrangement as claimed in claim 1, characterised in that the items of information to be processed, which comprise initial switching characteristics and information characters, arrive in connection-individual switching devices and that an overload signal is fed to - or is stored in assignment to - that connection-individual switching device via which has arrived the initial switching characteristic which has led to the reaching of the limit value.

3. A circuit arrangement as claimed in claim 1, characterised in that in a connection-individual switching device an overload signal actuates audible signal transmitting switching means which thereby signal that information characters are not being received via the respective connection-individual switching device.

## Revendications

1. Montage pour des installations de télécommunications, notamment des centraux téléphoniques, comportant des unités de commutation centrales et/ou partiellement centrales (ZW; GP1;... GPn) traitant les informations et possédant une capacité potentielle limitée du point de vue du traitement de l'information, et des dispositifs (Z) servant à déterminer la charge en trafic de traitement d'informations d'une unité respective de commutation et pour déterminer des surcharges en trafic de traitememt d'informations et pour lutter contre de telles surcharges à l'aide de compteurs (z1-z10) qui sont commandés pour effectuer un comptage progressif en fonction de signaux de commande concernant la charge en trafic et sont commandés pour effectuer un comptage régressif pendant des intervalles de temps adaptés à la capacité de traitement des informations, et atteignent une valeur limite, caractérisé par le fait que les signaux de commutation sont des indicatifs initiaux de commutation, notamment des signaux de commande dérivés de ces signaux et qui annoncent respectivement une arrivée ultérieure d'une information devant être traitée, et que par cumul de ces signaux au moyen du compteur (z1-z10), lorsque la valeur limite est atteinte, un critère de surcharge est formé soit entre un indicatif initial de commutation conduisant à ce que la valeur limite soit atteinte, et un premier signal, qui est associé commutation considérée, soit est formé après réception d'un indicatif initial de commutation et conduit, après la réception de l'information qui lui correspond, au fait qu'un autre indicatif initial de commutation n'est pas accepté.

2. Montage suivant la revendication 1, caractérisé par le fait que les informations qui doivent être traitées et sont constituées par des indicatifs initiaux de commutation et des signaux d'information, arrivent dans des dispositifs de commutation prévus individuellement pour les liaisons et qu'un signal de surcharge est envoyé au dispositif de commutation prévu individuellement pour chaque liaison ou est mémorisé en association à ce dispositif de commutation, au moyen duquel a été introduit l'indicatif initial de commutation qui a conduit à ce que la valeur finale soit atteinte.

3. Montage suivant la revendication 1, caractérisé par le fait que dans un dispositif de commutation prévu individuellement pour chaque liaison, un signal de surcharge actionne des moyens de commutation d'envoi de signaux acoustiques, qui signalent que des signaux d'information ne sont pas reçus par l'imtermédiaire du dispositif de commutation considéré, prévu individuellement par liaison.

FIG 1

# FIG 2